(19) Europäisches Patentamt

European Patent Office

Office européen des brevets

(11) **EP 0 546 596 B1**

(12) **FASCICULE DE BREVET EUROPEEN**

(45) Date de publication et mention
de la délivrance du brevet:
**02.02.2000 Bulletin 2000/05**

(51) Int. Cl.[7]: **G06F 17/16**

(21) Numéro de dépôt: **92203571.2**

(22) Date de dépôt: **19.11.1992**

(54) **Dispositif de mise en oeuvre de traitement de signaux impliquant une méthode des moindres carrés**

Einrichtung zur Durchführung einer Signalverarbeitung mit einem am geringsten quadratischen
Verfahren

Device to carry out the processing of signals comprising a least squares method

(84) Etats contractants désignés:
**CH DE FR GB IT LI**

(30) Priorité: **26.11.1991 FR 9114586**

(43) Date de publication de la demande:
**16.06.1993 Bulletin 1993/24**

(73) Titulaire:
**Koninklijke Philips Electronics N.V.**
**5621 BA Eindhoven (NL)**

(72) Inventeur: **Bellanger, Maurice**
**F-75008 Paris (FR)**

(74) Mandataire: **Chaffraix, Jean et al**
**Société Civile S.P.I.D.**
**156, Boulevard Haussmann**
**75008 Paris (FR)**

(56) Documents cités:
• **PROCEEDINGS OF THE 1988 INTERNATIONAL SYMPOSIUM ON CIRCUITS AND SYSTEMS; IEEE COMPUTER SOCIETY PRESS, NEW YORK, US vol. 3, 7 June 1988, ESPOO, FINLAND pages 2635 - 2639 M.G.BELLANGER 'COMPUTATIONAL COMPLEXITY AND ACCURACY ISSUES IN FAST LEAST SQUARES ALGORITHMS FOR ADAPTATIVE FILTERING'**
• **SIGNAL PROCESSING; ELSEVIER SCIENCE PUBLISHERS B.V. vol. 17, no. 4, August 1989, AMSTERDAM, THE NETHERLANDS pages 291 - 304 , XP000046219 M.G.BELLANGER 'THE FLS-QR ALGORITHM FOR ADAPTATIVE FILTERING'**
• **IEEE TRANSACTIONS ON SIGNAL PROCESSING; IEEE SIGNAL PROCESSING SOCIETY vol. 39, no. 4, April 1991, NEW YORK, US pages 879 - 891 P.A.REGALIA ET AL 'ON THE DUALITY BETWEEN FAST QR METHODS AND LATTICE METHODS IN LEAST SQUARES ADAPTATIVE FILTERING'**
• **PROCEEDINGS OF 1990 INTERNATIONAL CONFERENCE ON ACOUSTICS, SPEECH, AND SIGNAL PROCESSING, IEEE SIGNAL PROCESSING SOCIETY PRESS, NEW YORK, US vol. 3, 3 April 1990, ALBUQUERQUE, NEW MEXICO, US pages 1627 - 1630 P.H.REGALIA ET AL 'A HYBRID LATTICE-QR FAST ALGORITHMS FOR LEAST SQUARES ADAPTATIVE FILTERING'**
• **PROCEEDINGS OF ICASSP 86; IEEE ASSP SOCIETY, NEW YORK, US vol. 1/4, 7 April 1986, TOKYO, JAPAN pages 261 - 268 JIN-DER WANG ET AL 'A UNIFIED DERIVATION OF THE FAST RLS ALGORITHMS'**

**Description**

La présente invention concerne un dispositif de traitement de signaux pour la mise en oeuvre d'une méthode des moindres carrés, dispositif comportant un accès pour recevoir un échantillon x(n+1) à l'instant n+1, un autre accès pour recevoir au même instant un échantillon de référence y(n+1), des moyens de calculs opérant selon ledit traitement pour minimiser un signal e(n+1) représentant la différence entre les échantillons reçus et les échantillons de références.

Un tel dispositif peut trouver d'importantes applications dans le domaine du traitement du signal, notamment : pour des annuleurs d'écho utilisés dans les transmissions de données, pour l'élimination des trajets multiples en radiocommunications, et pour les prédicteurs qui sont susceptibles de réduire les quantités d'informations pour certains types de codage par exemple pour le codage de la parole.

L'invention est plus particulièrement adaptée au traitement décrit dans l'article suivant paru dans la revue SIGNAL PROCESSING N°22, 1991 :

"THE FLS-QR algorithm for adaptive filtering : The case of multichannel signals"

de M.G. BELLANGER et de P.A. REGALIA.

L'invention propose un dispositif du genre mentionné ci-dessus qui offre de bonnes performances en ce qui concerne la robustesse aux erreurs d'arrondis et aussi en ce qui concerne la rapidité.

Pour cela, l'invention est remarquable en ce que les moyens de calculs comportent des moyens de normalisation pour normaliser chaque échantillon x(n+1) par un facteur de normalisation $E_o^{1/2}$ en déterminant un angle ψ et la valeur $E_o^{1/2}(n+1)$ en fonction de la valeur antérieure $E_o^{1/2}(n)$ et de l'échantillon x(n+1) par la résolution de :

$$\begin{bmatrix} 0 \\ E_0^{1/2}(n+1) \end{bmatrix} = \begin{bmatrix} \cos\psi & -\sin\psi \\ \sin\psi & \cos\psi \end{bmatrix} \begin{bmatrix} x(n+1) \\ W^{1/2} E_0^{1/2}(n) \end{bmatrix}$$

Cette première mesure de l'invention apporte déjà l'important avantage que les calculs qui vont suivre s'effectueront sur des grandeurs dont on est sûr qu'elles resteront compatibles aux formats de calculs des processeurs du commerce.

Une autre caractéristique de l'invention selon laquelle le dispositif comporte des tables pour évaluer les fonctions sinusoïdales, coopérant avec les moyens de calcul, apporte l'avantage supplémentaire que ces moyens de calcul opèrent très rapidement.

L'invention sera realisée selon le revendication 1 ci-jointe.

La description suivante, accompagnée des dessins ci-annexés, le tout donné à titre d'exemple non limitatif, fera bien comprendre comment l'invention peut être réalisée.

La figure 1 représente la structure de filtre sur la base de laquelle repose l'invention.
La figure 2 représente une structure montrant la prédiction arrière utilisée pour l'explication du fonctionnement du dispositif de l'invention.
La figure 3 représente une structure montrant la prédiction avant utilisée pour l'explication du fonctionnement du dispositif de l'invention.
La figure 4 montre un exemple de réalisation d'un dispositif conforme à l'invention.
Les figures 5 et 6 représentent l'organigramme du fonctionnement du dispositif montré à la figure 4.
La figure 7 montre un détail de l'organigramme des figures 5 et 6.
La figure 8 montre une partie d'organigramme modifié pour la mise en oeuvre d'une variante de réalisation de l'invention.
La figure 9 montre une application à la prédiction du dispositif de l'invention.
La figure 10 montre une application au filtrage du dispositif de l'invention.

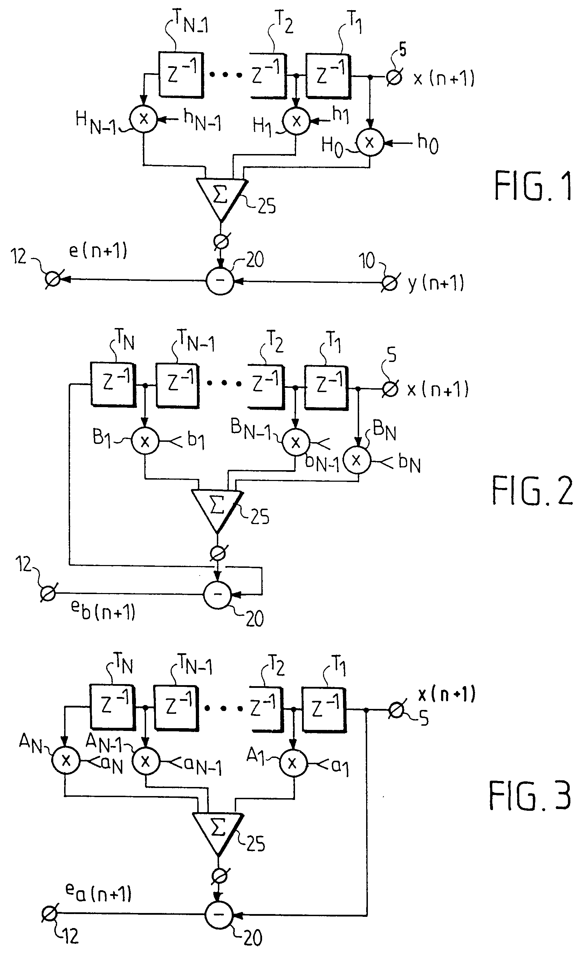

La figure 1 représente le schéma de base d'un filtre transversal à partir duquel est développée l'invention.

Sur cette figure 1, les échantillons des signaux à traiter sont appliqués à une borne 5 selon une cadence définie par 1/T ; comme on considère un instant "n+1" , la notation de ces échantillons d'entrée sera x(n+1) ; le filtrage est exécuté en fonction des échantillons d'un signal de référence appliqués à la borne 10, ils sont notés par y(n+1). Le résultat du filtrage est un signal e(n+1) qui apparait à une borne 12. Ce signal e(n+1) provient d'un organe de soustraction 20 qui soustrait le signal y(n+1) d'un signal issu d'un organe d'addition 25. Cet organe 25 additionne les résultats de différents organes de multiplication $H_0$, $H_1$, ..., $H_{N-1}$. Ces organes sont branchés respectivement à la borne d'entrée 5 et aux entrées de N organes de retard $T_1$, ..., $T_{N-1}$ amenant chacun un retard égal à T. Ces organes de multiplication $H_0$, $H_1$, ..., $H_{N-1}$ multiplient respectivement par $h_0$, $h_1$, ..., $h_{N-1}$ les différents échantillons retardés par les organes de retard $T_1$, ..., $T_{N-1}$.

La méthode des moindres carrés a pour but de minimiser la fonction coût suivante :

$$J(n+1) = \sum_{p=0}^{n+1} W^{n+1-p}[y(p) - X^t(p).H(n+1)]^2 \qquad (1)$$

ceci correspond à la norme d'un vecteur Ve ayant des composantes $e_p(n+1)$ (avec p compris entre 0 et n+1 inclus) :

$$e_p(n+1) = W^{(n+1-p)/2} [y(p) - X^t(p).H(n+1)] \qquad (2)$$

dans ces relations :

W est un facteur d'oubli $0 << W < 1$
$H(n+1)$ est le vecteur des coefficients $h_i$
$X(p)$ est le vecteur des données $x(p), x(p-1), ... x(p-N+1)$ et
$X^t(p)$ le vecteur transposé.

On définit maintenant une matrice $X_N(n+1)$ :

$$X_N(n+1) = \begin{bmatrix} x(n+1) & x(n) & \cdots & x(n+2-N) \\ W^{1/2}x(n) & W^{1/2}x(n-1) & \cdots & W^{1/2} \\ \cdots & \cdots & \cdots & \cdots \\ W^{n/2}x(1) & W^{n/2}x(0) & \cdots & 0 \\ W^{(n+1)/2}x(0) & 0 & \cdots & 0 \end{bmatrix} \qquad (3)$$

On cherche une matrice $Q_N(n+1)$ de dimensions $(n+2) \times (n+2)$ telle que :

$$Q_N(n+1).X_N(n+1) = \begin{bmatrix} 0 & 0 & \cdots & 0 \\ \vdots & \vdots & & \vdots & \vdots \\ 0 & \cdots & & \cdots & 0 \\ & T_N(n+1) & & \end{bmatrix} \qquad (4)$$

où $T_N(n+1)$ est une matrice triangulaire. Il est à noter que la matrice $Q_N(n+1)$ est une matrice de rotation qui conserve la norme des vecteurs et qu'en outre elle est orthogonale.

La matrice triangulaire $T_N(n+1)$ s'écrit sous la forme :

$$T_N(n+1) = \begin{bmatrix} 0 & \cdots & 0 & t_{N;N,N}(n+1) \\ 0 & \cdots & t_{N;N-1,N-1}(n+1) & t_{N;N-1,N}(n+1) \\ \vdots & \vdots & \vdots & \vdots \\ t_{N;1,1}(n+1) & \cdots & t_{N;1,N-1}(n+1) & t_{N;1,N}(n+1) \end{bmatrix} \quad (5)$$

En remarquant que la relation (3) peut s'écrire en faisant apparaître une récurrence entre $X_N(n+1)$ et $X_N(n)$ :

$$X_N(n+1) = \begin{bmatrix} x(n+1) & x(n) & \cdots & x(n+2-N) \\ & W^{1/2}X_N(n) & & \end{bmatrix} \quad (3 \text{ bis})$$

on peut alors en déduire la relation de récurrence suivante entre les matrices $Q_N(n+1)$ et $Q_N(n)$ :

$$Q_N(n+1) = \hat{Q}_N(n+1) \begin{bmatrix} 1 & 0 \\ 0 & Q_N(n) \end{bmatrix} \quad (6)$$

la matrice : $\hat{Q}_N(n+1)$ est une matrice formée d'une succession de N rotations qui, appliquée à la relation (3bis) rend nulle la première ligne :

$$\hat{Q}_N(n+1) = \begin{bmatrix} \cos\theta_N & \cdots & -\sin\theta_N & \cdots & 0 \\ \vdots & \vdots & \vdots & \vdots & \vdots \\ \sin\theta_N & \cdots & \cos\theta_N & \cdots & 0 \\ \vdots & \vdots & \vdots & \vdots & \vdots \\ 0 & \cdots & 0 & \cdots & 1 \end{bmatrix} \quad \cdots$$

$$\quad (7)$$

$$\begin{bmatrix} \cos\theta_1 & \cdots & 0 & \cdots & -\sin\theta_1 \\ \vdots & \vdots & \vdots & \vdots & \vdots \\ 0 & \cdots & 1 & \cdots & 0 \\ \vdots & \vdots & \vdots & \vdots & \vdots \\ \sin\theta_1 & \cdots & 0 & \cdots & \cos\theta_1 \end{bmatrix}$$

4

On peut faire apparaître aussi une autre récurrence selon N, ce qui revient à considérer un vecteur H(n+1) avec N + 1 composantes. La formule (4) s'écrit alors :

$$Q_{N+1}(n+1) \cdot X_{N+1}(n+1) \; = \; \begin{bmatrix} 0 & 0 & \cdots & 0 \\ \vdots & \vdots & & \vdots \; \vdots \\ 0 & \cdots & & \cdots \; 0 \\ & T_{N+1}(n+1) & & \end{bmatrix} \qquad \textbf{(8)}$$

$X_{N+1}(n+1)$ se déduit de la matrice $X_N(n+1)$ par ajout d'une colonne à gauche dont l'élément supérieur est x(n+1-N).

Les triangulisations permettent ensuite de résoudre le problème des moindres carrés.

On considère le vecteur Ve dont les composantes $e_p$ sont données par la formule (2). On le multiplie à gauche par la matrice $Q_N(n+1)$ pour définir un vecteur :

$$V_{eq} = Q_N(n+1) \, Ve \qquad\qquad (9)$$

les composantes de ce vecteur sont : $e_{q;p}(n+1)$

et compte tenu de la relation (2), on peut écrire :

$$V_{eq} \; = \; Q_N(n+1) \begin{bmatrix} y(n+1) \\ \vdots \\ W^{(n-N)/2} y(N) \\ W^{(n+1-N)/2} y(N-1) \\ \vdots \\ W^{(n+1)/2} y(0) \end{bmatrix} - Q_N(n+1) \, X_N(n+1) \, H(n+1) \qquad \textbf{(10)}$$

On détermine le vecteur H(n+1) de manière à ce que :

$$e_{q;N-1} = e_{q;N-2} = \dots = e_{q;0} = 0 \qquad\qquad (11)$$

La formule (9) s'écrit alors:

$$
\begin{bmatrix} e_{q;n+1} \\ \vdots \\ e_{q;N} \\ 0 \\ \vdots \\ 0 \end{bmatrix} = Q_N(n+1) \begin{bmatrix} y(n+1) \\ \vdots \\ W^{(n-N)/2}y(N) \\ W^{(n+1-N)/2}y(N-1) \\ \vdots \\ W^{(n+1)/2}y(0) \end{bmatrix} - \begin{bmatrix} 0 & 0 & \cdots & 0 \\ \vdots & \vdots & \vdots & \vdots \\ 0 & 0 & \cdots & 0 \\ & & T_N(n+1) & \end{bmatrix} H(n+1) \qquad (12)
$$

On obtient :

$$
Q_N(n+1) \begin{bmatrix} y(n+1) \\ W^{1/2}y(n) \\ \vdots \\ W^{(n-N)/2}y(N) \\ W^{(n+1-N)/2}y(N-1) \\ \vdots \\ W^{(n+1)/2}y(0) \end{bmatrix} = \begin{bmatrix} e_{q;n+1}(n+1) \\ \vdots \\ \vdots \\ e_{q;N}(n+1) \\ y_{q;N-1}(n+1) \\ \vdots \\ y_{q;0}(n+1) \end{bmatrix} \qquad (13)
$$

où :

$$
Y_q(n+1) = \begin{bmatrix} y_{q;N-1} \\ \vdots \\ y_{q;0} \end{bmatrix} = T_N(n+1).H(n+1) \qquad (14)
$$

Comme la matrice $Q_N(n+1)$ conserve la norme, la fonction coût précitée s'écrit :

$$
J(n+1) = \sum_{p=N}^{n+1} e_{q;p}^2(n+1) \qquad (15)
$$

On peut écrire aussi :

$$e_{n+1}(n+1) = [e_{n+1}(n+1), W^{1/2}e_n(n+1), \cdots, W^{n/2}e_0(n+1)] \begin{bmatrix} 1 \\ 0 \\ \vdots \\ 0 \end{bmatrix}$$

et compte tenu de l'orthogonalité de $Q_N(n+1)$ :

$$e_{n+1}(n+1) = [e_{q;n+1}, \cdots, e_{q;N}(n+1), 0, \cdots, 0] Q_N(n+1) \begin{bmatrix} 1 \\ 0 \\ \vdots \\ 0 \end{bmatrix}$$

On peut expliciter la première colonne de $Q_N(n+1)$ en remarquant qu'elle est identique à celle de $\hat{Q}_N(n+1)$ (voir formule (6)).
On écrit alors :

$$Q_N(n+1) \begin{bmatrix} 1 \\ 0 \\ \vdots \\ 0 \end{bmatrix} = \begin{bmatrix} \gamma_N(n+1) \\ 0 \\ \vdots \\ G_N(n+1) \end{bmatrix} \qquad (16)$$

où :

$$\gamma_N = \prod_{i=1}^{N} \cos\theta_i \qquad (17)$$

$G_N(n+1)$ est un vecteur formé des composantes $g_i(n+1)$ :

$$\left. \begin{array}{rl} g_N(n+1) &= \sin\theta_1 \\ g_{N-1}(n+1) &= \sin\theta_2 \cos\theta_2 \\ \cdots &= \cdots \\ g_1(n+1) &= \sin\theta_N \prod_{i=1}^{N-1} \cos\theta_i \end{array} \right\} \qquad (18)$$

On en déduit une relation importante de l'algorithme :

$$e_{n+1}(n+1) = e(n+1) = e_{q;n+1} \cdot \gamma_N(n+1) \tag{19}$$

En utilisant la formule de récursivité (6) et compte tenu de la relation (13) on obtient :

$$\begin{bmatrix} e_{q;n+1}(n+1) \\ \vdots \\ e_{q;N}(n+1) \\ Y_q(n+1) \end{bmatrix} = \hat{Q}_N(n+1) \begin{bmatrix} y(n+1) \\ W^{1/2}\begin{bmatrix} e_{q;n}(n) \\ \vdots \\ e_{q;N}(n) \\ Y_q(n) \end{bmatrix} \end{bmatrix} \tag{20}$$

De ce système matriciel, on extraît un sous-système qui fait intervenir une matrice $Q_a(n+1)$ ; cette matrice est dérivée de la matrice $Q_N(n+1)$ par suppression des rangées et des colonnes qui n'ont que des zéros et des uns.

On obtient alors un sous-système important pour l'algorithme :

$$\begin{bmatrix} e_{q;n+1}(n+1) \\ Y_q(n+1) \end{bmatrix} = Q_a(n+1) \begin{bmatrix} y(n+1) \\ W^{1/2}Y_q(n) \end{bmatrix} \tag{21}$$

En utilisant les notions de prédiction avant et arrière, on évalue de deux manières différentes la matrice $T_{N+1}(n+1)$.

APPORT DE LA PREDICTION ARRIERE

Le schéma qui explicite cette prédiction arrière est montré à la figure 2.

Sur cette figure 2, les échantillons des signaux à traiter $x(n+1)$ sont toujours appliqués à la borne 5 ; la prédiction est effectuée en fonction des échantillons du signal d'entrée retardé $x(n+1-N)$. Le retard de NT est procuré par N organes de retard $T_1, ..., T_N$. Le résultat de la prédiction est un signal $e_b(n+1)$ qui apparaît à la borne 12. Ce signal $e_b(n+1)$ provient de l'organe de soustraction 20 qui soustrait le signal $x(n+1-N)$ d'un signal issu de l'organe d'addition 25. Cet organe 25 additionne les résultats de différents organes de mutiplication $B_1, B_2, ..., B_N$. Ces organes sont branchés respectivement aux entrées des organes de retard $T_N, ..., T_1$. Ces organes de mutiplication $B_1, B_2, ..., B_N$ multiplient respectivement par $b_1, b_2, ..., b_N$ les différents échantillons.

L'erreur de prédiction arrière s'écrit donc :

$$e_b(n+1) = x(n+1-N) - \sum_{p=0}^{N-1} b_{N-p} \cdot x(n+1-p) \tag{22}$$

On peut faire apparaître un vecteur $V_{eb}$ en s'inspirant de la formule (2) dans laquelle le signal $y(p)$ est remplacé par $x(p-N)$ et $H(n+1)$ par $B_N(n+1)$ :

$$V_{eb} = \begin{bmatrix} e_{b;n+1}(n+1) \\ W^{1/2} e_{b;n}(n+1) \\ \vdots \\ W^{(n+1)/2} e_{b;0}(n+1) \end{bmatrix} \quad (23)$$

$$= \begin{bmatrix} x(n+1-N) \\ W^{1/2} x(n-N) \\ \vdots \\ W^{(n+1)/2} x(-N) \end{bmatrix} - X_N(n+1) B_N(n+1)$$

En se reférant à la formule (11), on définit un vecteur erreur $V_{eq}$ dont les élément $e_{bq;i}(n+1)$ sont tels qu'ils minimisent sa norme :

$$V_{ebq} = Q_N(n+1) . V_{eb} = \begin{bmatrix} e_{bq;n+1}(n+1) \\ \vdots \\ e_{bq;N}(n+1) \\ 0 \\ \vdots \\ 0 \end{bmatrix} \quad (24)$$

compte tenu de la définition de $X_{N+1}(n+1)$, des relations (4), (23) et (24) on peut écrire :

$$Q_N(n+1) . X_{N+1}(n+1) = \begin{bmatrix} 0 & e_{bq;n+1}(n+1) \\ \vdots & \vdots \\ 0 & e_{bq;N}(n+1) \\ T_N(n+1) & X_{bq;N}(n+1) \end{bmatrix} \quad (25)$$

où

$$X_{bq;N}(n+1) = T_N(n+1).B_N(n+1) \quad (26)$$

L'énergie de prédiction arrière $E_{bN}(n+1)$ est donnée par la formule suivante :

$$E_{bN}(n+1) = \sum_{p=0}^{n+1} W^P[x(p-N) - X^t(p).B_N(n+1)]^2 \qquad (27)$$

et compte tenu de (24)

$$E_{bN}(n+1) = \sum_{p=N}^{n} e_{bq;p}^2(n+1) \qquad (28)$$

On obtient maintenant la matrice $T_{N+1}(n+1)$ en effectuant une série de rotations cumulatives sur le deuxième membre de la relation (25) et en tenant compte de (28)

$$T_{N+1}(n+1) = \begin{bmatrix} 0 & \cdots & 0 & E_{bN}^{1/2}(n+1) \\ & T_N(n+1) & & X_{bq;N}(n+1) \end{bmatrix} \qquad (29)$$

et par induction :

$$T_{N+1} = \begin{bmatrix} 0 & 0 & \cdots & E_{bN}^{1/2}(n+1) \\ \vdots & \vdots & & \vdots \\ 0 & E_{b1}^{1/2} & \cdots & X_{bq;N}(n+1) \\ E_{b0}^{1/2}(n+1) & X_{bq;N}(n+1) & \cdots & \end{bmatrix} \qquad (30)$$

## APPORT DE LA PREDICTION AVANT

Le schéma qui explicite cette prédiction avant est montré à la figure 3.

Sur cette figure 3, les échantillons des signaux à traiter x(n+1) sont appliqués toujours appliqués à la borne 5 ; la prédiction est effectuée en fonction des échantillons du signal d'entrée x(n+1). Le résultat de la prédiction est un signal $e_a(n+1)$ qui apparaît à la borne 12. Ce signal $e_a(n+1)$ provient de l'organe de soustraction 20 qui soustrait le signal x(n+1) d'un signal issu de l'organe d'addition 25. Cet organe 25 additionne les résultats de différents organes de mutiplication $A_1$, $A_2$, ..., $A_N$. Ces organes sont branchés respectivement aux sorties des organes de retard $T_1$, ..., $T_N$. Ces organes de mutiplication $A_1$, $A_2$, ..., $A_N$ multiplient respectivement par $a_1$, $a_2$, ..., $a_N$ les différents échantillons.

L'erreur de prédiction avant s'écrit donc :

$$e_a(n+1) = x(n+1) - \sum_{p=1}^{N} a_p.x(n+1-p) \qquad (31)$$

Là aussi on peut faire apparaître un vecteur $V_{ea}$ et le vecteur $V_{eaq}$ associé au moyen de la matrice $Q_N(n+1)$ ; en minimisant la norme du vecteur $V_{eaq}$ on a la relation suivante :

$$\begin{bmatrix} Q_N(n) & 0 \\ 0 & 1 \end{bmatrix}.X_{N+1}(n+1) = \begin{bmatrix} e_{aq;n+1}(n+1) & 0 & \cdots & 0 \\ & \vdots & & \vdots \\ e_{aq;N+1}(n+1) & & & \\ X_{aq;N} & & T_N(n) & \\ W^{n/2}x(0) & 0 & \cdots & 0 \end{bmatrix} \qquad (32)$$

où :

$$X_{aq;N} = T_N(n+1).A_N \qquad (33)$$

Un ensemble de rotations $Q_{ea}(n+1)$ effectuées sur le deuxième membre de la relation précédente accumule les différents $e_{aq;i}(n+1)$ avec l'élément $W^{n/2}x(0)$ de la dernière ligne de sorte que celle-ci va contenir, après l'accumulation, l'énergie de la prédiction avant :

$$E_a^{1/2}(n+1) = W^{n/2}x(0) + e_{aq;n+1}^2 + e_{aq;n}^2 + ... \qquad (34)$$

Puis un ensemble de rotation $Q_\alpha(n+1)$ fournit la matrice $T_{N+1}(n+1)$.

$$Q_\alpha(n+1) \begin{bmatrix} X_{aq;N}(n+1) & 0 & \cdots & \\ & \vdots & & \\ & & T_N(n) & \\ E_a^{1/2}(n+1) & 0 & \cdots & 0 \end{bmatrix} = T_{N+1}(n+1) \qquad (35)$$

Cette matrice de rotation peut être explicitée :

$$Q_\alpha(n+1) = \begin{bmatrix} \cos\alpha_N & \cdots & 0 & \cdots & -\sin\alpha_N \\ \vdots & & \vdots & \vdots & \vdots & \vdots \\ 0 & & \cdots & 1 & \cdots & 0 \\ \sin\alpha_N & \cdots & 0 & \cdots & \cos\alpha_N \end{bmatrix} \cdots \quad (36)$$

$$\begin{bmatrix} 1 & \cdots & 0 & \cdots & & 0 \\ 0 & \cdots & 1 & \cdots & & 0 \\ \cdots & 0 & \cdots & \cos\alpha_1 & -\sin\alpha_1 \\ \cdots & 0 & \cdots & \sin\alpha_1 & \cos\alpha_1 \end{bmatrix}$$

Ceci peut être résumé par :

$$\begin{bmatrix} I_{n-N+1} & 0 \\ 0 & Q_\alpha(n+1) \end{bmatrix} \cdot Q_{6a}(n) \cdot \begin{bmatrix} Q_N(n) & 0 \\ 0 & 1 \end{bmatrix} = Q_{N+1}(n+1) \quad (37)$$

On évalue la quantité suivante :

$$Q_{N+1}(N+1) \begin{bmatrix} 1 \\ 0 \\ \vdots \\ 0 \end{bmatrix} \quad (38)$$

Or avec la formule (16) :

$$\begin{bmatrix} Q_N(n) & 0 \\ 0 & 1 \end{bmatrix} \begin{bmatrix} 1 \\ 0 \\ \vdots \\ 0 \end{bmatrix} = \begin{bmatrix} \gamma_N(n) \\ 0 \\ \vdots \\ 0 \\ G_N(n) \\ 0 \end{bmatrix} \qquad (39)$$

Puis tenant compte que du fait que dans ce cas la matrice $Q_{ea}(n+1)$ ne participe que pour une seule rotation :

$$Q_{ea}(n+1) \begin{bmatrix} \gamma_N(n+1) \\ 0 \\ \vdots \\ 0 \\ G_N(n+1) \\ 0 \end{bmatrix} = \begin{bmatrix} \gamma_N(n) . W^{1/2} E_a^{1/2}(n)/E_a^{1/2}(n+1) \\ 0 \\ \vdots \\ 0 \\ G_N(n) \\ \gamma_N(n) e_{aqn}(n+1)/E_a^{1/2}(n+1) \end{bmatrix} \qquad (40)$$

En constatant que la matrice $Q_\alpha(n+1)$ n'affecte que les N+1 termes du bas de la relation précédente, on peut écrire :

$$Q_\alpha(n+1) \begin{bmatrix} G_N(n) \\ \gamma_N(n) e_{aqn}(n+1)/E_{aN}^{1/2}(n+1) \end{bmatrix} = \begin{bmatrix} g_{N+1}(n+1) \\ G_N(n+1) \end{bmatrix} \qquad (41)$$

La quantité donnée à la relation (38) est donc déterminée.
Dans ce qui suit $X_q$ et $X_{aq}$ seront confondus.

L'ALGORITHME

**1) partie prédiction**

*1ère ETAPE*

$$\begin{bmatrix} e_{aq}(n+1) \\ X_q(n+1) \end{bmatrix} = Q_a(n) \begin{bmatrix} x(n+1) \\ W^{1/2}X_q(n) \end{bmatrix} \qquad (42)$$

Cette étape découle de la formule (21) en faisant les substitutions évidentes :

*2ème ETAPE*

$$E_a(n+1) = WE_a(n) + e_{aq}^2(n+1) \qquad (43)$$

Cette étape se déduit de la formule (34) :

*3ème ETAPE*

$$\begin{bmatrix} 0 \\ E_{b0}^{1/2}(n+1) \end{bmatrix} = Q_\alpha(n+1) \begin{bmatrix} X_q(n+1) \\ E_a^{1/2}(n+1) \end{bmatrix} \qquad (44)$$

Cette étape se déduit en identifiant les deux expressions de $T_{N+1}(n+1)$ obtenues dans les relations (30) et (35) :

*4ème ETAPE et 5ème ETAPE*

$$\alpha_2 = \gamma_N(n)e_{aq}(n+1)/E_a^{1/2}(n+1) \qquad (45)$$

$$\begin{bmatrix} \alpha_1 \\ G_N(n+1) \end{bmatrix} = Q_\alpha(n+1) \begin{bmatrix} G_N(n) \\ \alpha_2 \end{bmatrix} \qquad (46)$$

Ces deux étapes se déduisent de la relation (41) dans laquelle on pose :

$$\alpha_1 = g_{N+1}(n+1)$$

*6ème ETAPE*

$$\begin{bmatrix} \gamma_N(n+1) \\ G_N(n+1) \end{bmatrix} = Q_a(n+1) \begin{bmatrix} 1 \\ 0 \\ \vdots \end{bmatrix} \qquad (47)$$

Cette étape se déduit de la relation (16) dans laquelle la matrice $Q_N(n+1)$ a été substituée par la matrice $Q_a(n+1)$ et le vecteur de gauche a été apuré de ses zéros inutiles.

**2) partie filtrage**

*1ère ETAPE*

$$\begin{bmatrix} e_q(n+1) \\ Y_q(n+1) \end{bmatrix} = Q_a(n+1) \begin{bmatrix} y(n+1) \\ W^{1/2} Y_q(n) \end{bmatrix} \qquad (48)$$

Cette étape découle directement de la formule (21).

*2ème ETAPE*

$$e(n+1) = \gamma_N(n+1)\, e_q(n+1) \qquad (49)$$

Cette dernière étape découle directement de la formule (19).

**3) mise à jour des matrices**

*1-MISE A JOUR DE LA MATRICE $Q_\alpha$*

Cette matrice est définie par la formule (35), elle annule les différentes composantes de $X_{aq}$ en les cumulant sur la dernière ligne de la matrice, on peut donc montrer relativement facilement que :

$$\sin\alpha_i = \frac{X_{aq;i}}{\sqrt{X_{aq;i}^2 + \sum_{k=1}^{i-1} X_{aq;k}^2 + E_a(n+1)}} \qquad (50)$$

les cosinus se déduisent de la façon habituelle.

*2- MISE A JOUR DE LA MATRICE $Q_\alpha$*

Cette matrice est formée des éléments significatifs (les sinus et les cosinus) de la matrice $Q_N(n+1)$ explicités par la relation (7). La valeur de ces différent sinus et cosinus résulte de l'étape désignée par la formule (46) qui donne l'ensemble des composantes du vecteur $G_N$ ; on obtient ainsi la valeur des différent sinus en se reportant aux formules (17) et (18) :

$$\left.\begin{array}{l} \sin\theta_i = g_{N-i}/\gamma_i \\[3mm] \gamma_{i+1} = \gamma_i \cos\theta_i \end{array}\right\} \qquad (51)$$

les cosinus se déduisant de la façon habituelle.

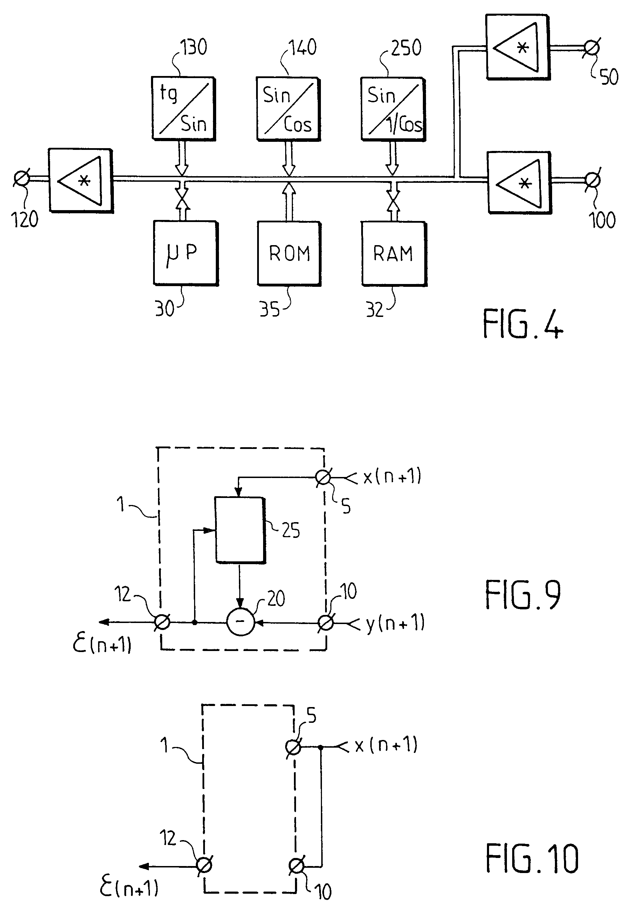

Pour mettre en oeuvre l'invention, on utilise le dispositif montré schématiquement à la figure 4. Ce dispositif est formé à partir d'un processeur de signal genre TMS 320 par exemple, portant sur cette figure la référence 30 ; autour de ce processeur, on trouve un ensemble de mémoires RAM référencées 32 qui contiennent des données et une mémoire ROM 35 contenant notamment le programme de fonctionnement. Un accès 50 reçoit les données à filtrer x(n+1) ou à prédire, un accès 100, les données de références y(n+1), dans le cas du filtrage, et un accès 120 pour fournir les données filtrées ou prédites.

Conformément à l'invention le dispositif comporte :

- des moyens de normalisation du signal d'entrée qui détermine des valeurs sinusoïdales d'un angle $\psi$ déterminé par la relation ci-desssous :

$$\begin{bmatrix} 0 \\ E_0^{1/2}(n+1) \end{bmatrix} = \begin{bmatrix} \cos\psi & -\sin\psi \\ \sin\psi & \cos\psi \end{bmatrix} \begin{bmatrix} x(n+1) \\ W^{1/2} E_0^{1/2}(n) \end{bmatrix} \qquad (52)$$

Ainsi l'invention, après cette normalisation, propose de faire les substitutions suivantes :

**a) formule (42)**

$$x(n+1) \quad \rightarrow \quad \sin\psi \quad = \quad \frac{x(n+1)}{E_0^{1/2}(n+1)}$$

$$X_q(n) \quad \rightarrow \quad X_q^{/}(n) \quad = \quad \frac{X_q(n)}{E_0^{1/2}(n)}$$

$$W^{1/2}X_q(n) \quad \rightarrow \quad \cos\psi \cdot X_q^{/}(n) \quad = \quad \frac{W^{1/2}X_q(n)}{E_0^{1/2}(n)} \cdot \frac{E_0^{1/2}(n)}{E_0^{1/2}(n+1)}$$

$$e_{aq}(n+1) \quad \rightarrow \quad e_{aq}^{/} \quad = \quad \frac{e_{aq}}{E_0^{1/2}(n+1)}$$

$$\left.\vphantom{\begin{array}{c}a\\a\\a\\a\\a\\a\\a\end{array}}\right\} \quad (53)$$

**b) formule (43)**

Cette formule n'est plus nécessaire.

**c) formule (44)**

Cette formule se transforme en appliquant les substitutions ci-dessus et en ajoutant la suivante :

$$E_a^{1/2}(n+1) \quad \rightarrow \quad E_a^{/\,1/2}(n+1) \quad = \quad \frac{E_a^{1/2}(n+1)}{E_0^{1/2}(n+1)} \qquad (54)$$

$$\begin{bmatrix} X_q^{/}(n+1) \\ E_a^{/\,1/2}(n+1) \end{bmatrix} = Q_\alpha^{-1}(n+1) \begin{bmatrix} 0 \\ \vdots \\ 0 \\ 1 \end{bmatrix} \qquad (55)$$

Comme la matrice $Q_\alpha(n+1)$ est orthogonale, son inverse est égal à sa transposée c'est-à-dire que l'inverse se déduit par une permutation des lignes avec les colonnes.

**d) formule (45)**

Cette formule reste valable après les substitutions déjà indiquées.

**e) formules (46) à (51)**

Elles restent identiques.
Le procédé de l'invention peut alors se résumer :

**1) Initialisation**

- les valeurs des cosinus sont mis à "1"
- les valeurs des sinus sont mis à "0"
- les $X'_q$ sont mis à "0"
- les $Y_q$ sont mis à "0"

**2) Normalisation**

Voir formule (52)

**3) Prédiction**

a)

$$\begin{bmatrix} e'_{aq}(n+1) \\ X'_q(n+1) \end{bmatrix} = Q_a(n) \begin{bmatrix} \sin \psi \\ \cos \psi \cdot X'_q(n) \end{bmatrix} \qquad (56)$$

b) mise à jour de $Q_\alpha(n+1)$
c)

$$\begin{bmatrix} X'_q(n+1) \\ E_a^{'1/2}(n+1) \end{bmatrix} = Q_\alpha^{-1} \begin{bmatrix} 0 \\ \vdots \\ 0 \\ 1 \end{bmatrix} \qquad (57)$$

d)

$$\alpha_2 = \gamma_N \cdot e'_{aq}(n+1)/E_a^{1/2}(n+1) \qquad (58)$$

**18**

e)

$$\begin{bmatrix} g_{N+1}(n+1) \\ G_N(n+1) \end{bmatrix} = Q_\alpha(n+1) \begin{bmatrix} G_N(n) \\ \alpha_2 \end{bmatrix} \qquad (59)$$

f) mise à jour de $Q_a(n+1)$

g)

$$\begin{bmatrix} \gamma_N(n+1) \\ G_N(n+1) \end{bmatrix} = Q_a(n+1) \begin{bmatrix} 1 \\ 0 \\ \vdots \\ 0 \end{bmatrix} \qquad (60)$$

h) filtrage

$$\begin{bmatrix} e_q(n+1) \\ Y_q(n+1) \end{bmatrix} = Q_a(n+1) \begin{bmatrix} y(n+1) \\ W^{1/2}Y_q(n) \end{bmatrix} \qquad (61)$$

Selon un autre aspect de l'invention, il est prévu une première table de valeurs sinusoïdales 130 qui fournit, par exemple, une valeur de sinus à partir d'une valeur de tangente. Il est évident que cette table contenant des valeurs dans une mémoire morte peut être comprise dans la mémoire morte 35.

Selon un autre aspect de l'invention, il est prévu une deuxième table de valeurs sinusoïdales 140 qui fournit une valeur de cosinus en fonction d'une valeur de sinus. Les remarques faites ci-dessus pour la mémoire 130 s'appliquent.

Selon encore un autre aspect de l'invention, il est prévu une troisième table de valeurs sinusoïdales 250 qui fournit une valeur de cosinus inverse en fonction d'une valeur de sinus.

Cette caractéristique est mise à profit si l'on fait les substitutions suivantes :

$$\left. \begin{array}{lll} \gamma & = \gamma' & \rightarrow \quad \dfrac{1}{\gamma} \\[20pt] \cos\theta_i & \rightarrow & \dfrac{1}{\cos\theta_i} \end{array} \right\} \qquad (62)$$

Ainsi, par la présence de ces tables, un grand nombre de divisions ont été supprimées et aucune extraction de racine carrée n'est nécessaire.

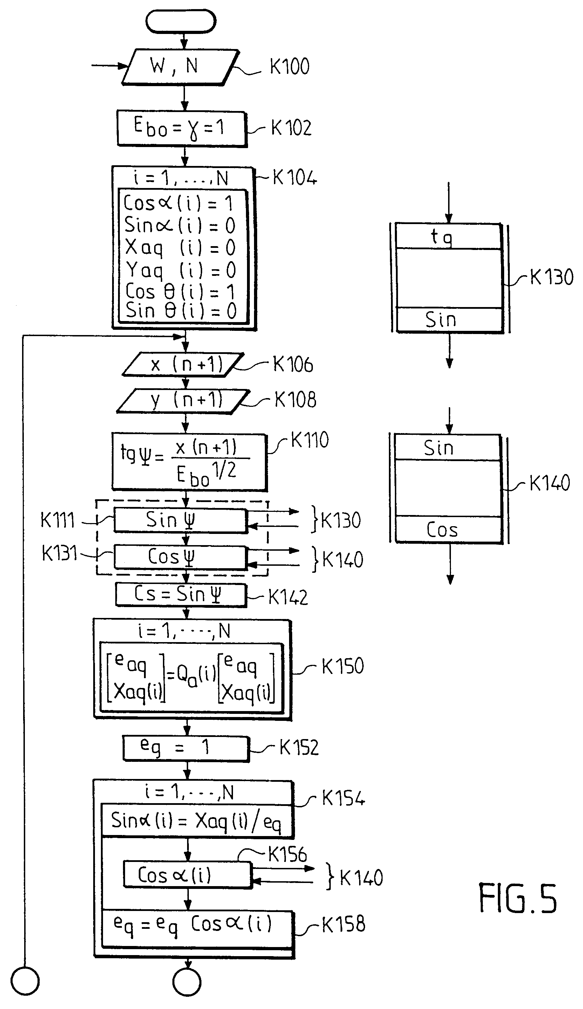

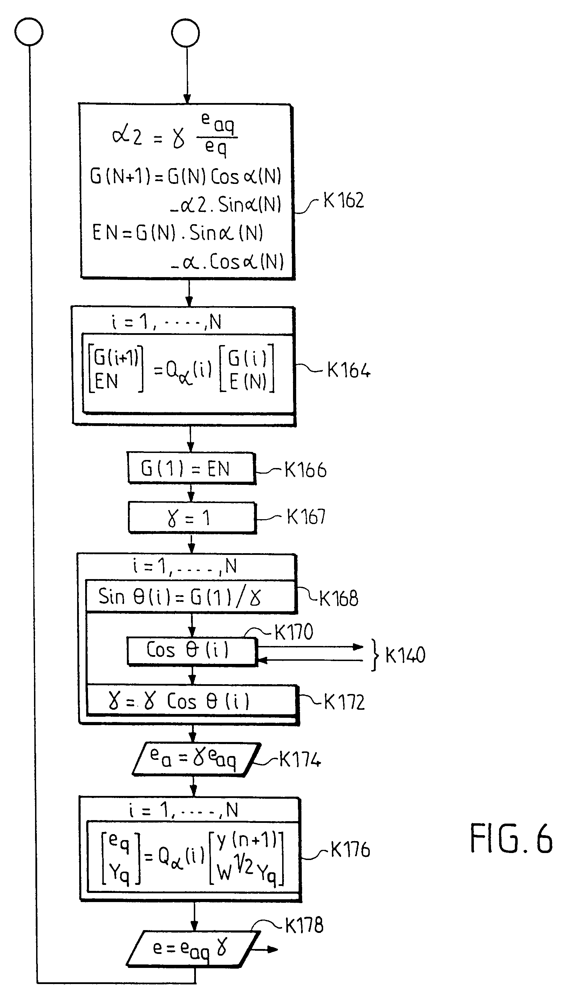

Les différents moyens préconisés par l'invention sont obtenus d'une manière avantageuse par un programme contenu dans la mémoire 35. L' organigramme de ce programme est montré aux figures 5 et 6.

Cet organigramme débute par une case K100 où les valeurs de N (ordre de filtrage) et W (facteur de pondération) sont entrées. Les valeurs de $E_{bo}$ et $\gamma$ sont initialisées à 1 à la case K102. La case K104 indique une initialisation de différentes valeurs indexées selon i qui varie de 1 à N ; le cosinus des angles $\theta_i$ et $\alpha_i$ sont mis à 1 tandis que leur sinus sont mis à 0 ; les valeurs $X_{aq(i)}$ et $Y_{aq(i)}$ sont, elles aussi, mises à 0. Les cases K106 et K108 représentent respectivement les valeurs de x(n+1) et y(n+1) qui sont lues à partir des accés 50 et 100. Puis débute la phase de normalisation indiquée à la case K110 ; cette phase débute par le calcul du quotient de la valeur de l'échantillon sur la valeur de la racine carrée de $E_{b0}$ ce qui donne la valeur de tangente de l' angle $\psi$. En adressant la table 130, on obtient la valeur de sin $\psi$, ceci est indiqué à la case K111 et l'opération effectuée par la table est désignée par K130. Pour obtenir le cosinus, on adresse la table 140, ceci est indiqué à la case K131 et l'opération de la table 140, par la case K140. Puis à la case K142, on fait appel à une variable auxiliaire "es" qui prend la valeur sin $\psi$. La case K150 indique le calcul de $e_{aq}$ et de $X_{aq(i)}$ conformément à la formule (I2). Cette formule peut être aussi explicitée de la manière suivante, en s'inspirant des normes du language FORTRAN.

$$D0\ I = 1,N$$

$$e_{aq} = es$$

$$es = e_{aq}.\cos\theta(I) - \cos\psi\ .\ X_{aq}(I)\ .\ \sin\theta(I)$$

$$X_{aq}(I) = e_{aq}.\sin\theta(I) + \cos\psi\ .\ X_{aq}(I)\ .\ \cos\theta(I)$$

$$\text{CONTINUE}$$

Avant d'entreprendre un autre traitement, on initialise la variable $e_q$ à 1, case K152. Cet autre traitement montré à la case K154 consiste à déterminer le sinus des différents angles $\alpha(I)$ en évaluant les quantités données à la formule (50). Par appel, case K156, à la table 140, on obtient la valeur du cosinus associé. La case K158 donne la valeur $e_q$ (c'est la valeur $E^{1/2}_a(n+1)$ de la formule. Puis à la case K162, figure 6, on détermine les quantités données par la formule (45) ; à la case K164, on évalue les N valeurs indiquées par la formule (46). Cette formule peut être explicitée par

$$D0\ I = 2,N$$

$$G(N+2-I) = G(N+1-I).\cos\alpha(N+1-I) - EN.\sin\alpha(N+1-I)$$

$$EN1 = G(N+1-I).\sin\alpha(N+1-I) + EN.\cos\alpha(N+1-I)$$

$$EN = EN1$$

$$\text{CONTINUE}$$

La case K166 précise la valeur G(1), puis à la case K167 on initialise la valeur de $\gamma$. Les cases K168, K170 et K172 représentent la mise à jour de la matrice $Q_a(n+1)$. On remarquera la case K170 qui fournit la valeur du cosinus par appel avec la valeur du sinus, de la table indiquée à la case K140.

La valeur de $\gamma$ est ensuite utilisée pour fournir la valeur e(n+1) (case K174).

Le filtrage est exécuté à la case K176 selon le processus :

$$D0\ I = 1,N$$

$$E_q = e_a$$

$$e_a = E_q\ .\cos\theta(I) - W^{1/2}\ Y_q(I)\ \sin\theta(I)$$

$$Y_q(I) = E_q.\ \sin\theta(I) + W^{1/2}\ Y_q(I).\ \cos\theta(I)$$

$$\text{CONTINUE}$$

la case K178 donne le résultat du filtrage.

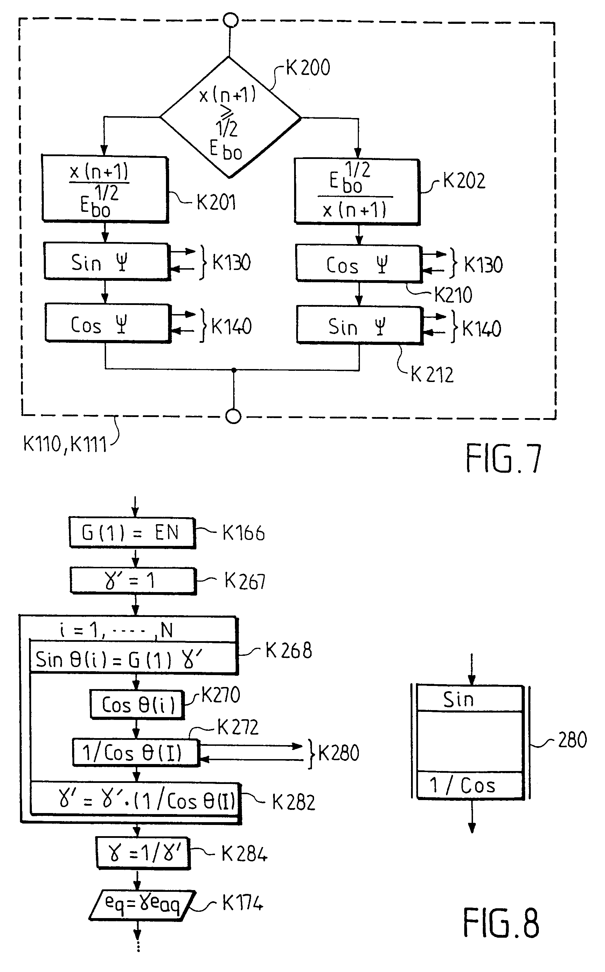

A la figure 7, on montre une variante de réalisation de l'étape de normalisation ; cette étape a pour but de limiter la taille de la table K130. Cette variante remplace les cases K110 et K111 de l'organigramme de la figure 5. La case K200 est un test de x(n+1) par rapport à $E_{bo}^{1/2}$ de façon à effectuer une division, cases K201, K202 dont le résultat soit inférieur à "1". Si on effectue l'opération de la case K201 on a la valeur de tg ψ, la suite des opérations est identique à celles de la figure 5. Si on effectue l'opération de la case K202, on a la valeur 1/tg ψ ; pour obtenir le cosinus de cet angle on accède à la table K130 et pour obtenir le sinus à la table K140.

La figure 8 montre comment la matrice $Q_a$ peut être mise à jour en évitant des divisions. Cette partie d'organigramme vient remplacer la partie d'organigramme de la figure 6, située entre les cases K166 et K174. La case K267 indique l'initialisation d'un paramètre γ'. Puis la case K268 indique la détermination des sinus de l'angle θ, la case K270 est un appel à la table K140 pour mettre en mémoire les différents cosinus de cet angle, puis à la case K272 on fait appel à une autre table K280 qui fournit l'inverse du cosinus en fonction du sinus. A la case K282 on détermine le coefficient γ'. A la fin de l'itération on rétablit la valeur de γ en remarquant que ces valeurs sont inverses l'une de l'autre (case K284).

A la figure 9, on a montré l'utilisation du dispositif de l'invention en tant que filtre, sur cette figure on voit que le signal d'erreur e(n+1) de filtrage à la borne 12 pilote le circuit 25 de sorte que celui-ci se comporte ou simule la réponse de filtrage souhaitée conformément aux échantillons y(n+1) appliqués à l'accès 10.

A la figure 10, l'utilisation représentée est la prédiction, pour cela l'échantillon d'entrée est appliqué à la fois à l'accès 5 et à l'accès 10. Ces techniques de prédiction sont appliquées dans les techniques de compression d'information car plus la prédiction est précise et moins il est nécessaire de transmettre d'échantillons x(n+1).

**Revendications**

**1.** Dispositif de traitement de signaux pour la mise en oeuvre d'une méthode des moindres carrés, dispositif comportant :

- un accès (50) pour recevoir un échantillon x(n+1) à l'instant n+1,
- un autre accès (100) pour recevoir au même instant un échantillon de référence y(n+1),
- un accès (120) pour fournir une donnée filtrée e(n+1) au même instant
- des moyens de calculs (30) opérant selon ledit traitement pour minimiser chaque signal e(n+1) représentant la différence entre chaque échantillon reçus x(n+1) et chaque échantillon de référence y(n+1),

caractérisé en ce que les moyens de calculs comportent des moyens de normalisation pour normaliser chaque échantillon x(n+1) par un facteur de normalisation d'energie $E_o^{1/2}$ en déterminant des valeurs sinusoïdales d'un angle ψ et la valeur $E_o^{1/2}(n+1)$ en fonction de la valeur antérieure $E_o^{1/2}(n)$ et d'un facteur de pondérerion et l'échantillon x(n+1) par la résolution de :

$$\begin{bmatrix} 0 \\ E_0^{1/2}(n+1) \end{bmatrix} = \begin{bmatrix} \cos\psi & -\sin\psi \\ \sin\psi & \cos\psi \end{bmatrix} \begin{bmatrix} x(n+1) \\ W^{1/2} E_0^{1/2}(n) \end{bmatrix}$$

**2.** Dispositif de traitement d'informations selon la revendication 1, caractérisé en ce que pour évaluer les différentes fonctions sinusoïdales, il est prévu une table de fonctions sinusoïdales se présentant de préférence sous la forme d'une mémoire morte.

**3.** Dispositif de traitement d'informations selon l'une des revendications 1 ou 2 impliquant des matrices Qa et Qα, caractérisé en ce que les moyens de calculs comportent des moyens d'initialisation pour mettre

- les valeurs des cosinus à "1"
- les valeurs des sinus à "0"
- pour donner à des valeurs $X'_q$ et $Y_q$ des valeurs "0",

des moyens pour évaluer, après la mise en oeuvre desdits moyens de normalisation

a) la quantité

$$\begin{bmatrix} e'_{aq}(n+1) \\ X'_{q}(n+1) \end{bmatrix} = Q_a(n) \begin{bmatrix} \sin\psi \\ \cos\psi \cdot X'_q(n) \end{bmatrix}$$

b) les composantes $Q_\alpha$
c) la quantité

$$\begin{bmatrix} X'_q(n+1) \\ E_a^{1/2}(n+1) \end{bmatrix} = Q_\alpha^{-1} \begin{bmatrix} 0 \\ \vdots \\ 0 \\ 1 \end{bmatrix}$$

d) les quantités

$$\alpha_2 = \gamma_N \cdot e'_{aq}(n+1)/E_a^{1/2}(n+1)$$

où

$$\gamma_N = \prod_{i=1}^{N} \cos\theta_i$$

et

$$\begin{bmatrix} \alpha_1 \\ G_N(n+1) \end{bmatrix} = Q_\alpha(n+1) \begin{bmatrix} G_N(4) \\ \alpha_2 \end{bmatrix}$$

où

$$\alpha_1 = g_{n+1}(n+1),$$

et où
$G_N(n+1)$ est un vecteur formé de composantes $g_i(n+1)$, où $g_N(n+1)=\sin\theta_1$

$$g_{N-1}(n+1) = \sin\theta_2 \cos\theta_2$$

$$\cdot$$
$$\cdot$$
$$\cdot$$

$$g_1(n+1) = \sin\theta_N \prod_{i=1}^{N-1} \cos\Theta_i$$

e) la quantité

$$
\begin{bmatrix} g_{N+1}(n+1) \\ G_N(n+1) \end{bmatrix} = Q_\alpha(n+1) \begin{bmatrix} G_N(n) \\ \alpha_2 \end{bmatrix}
$$

f) les composantes de $Q_a(n+1)$
g) la quantité

$$
\begin{bmatrix} \gamma_N(n+1) \\ G_N(n+1) \end{bmatrix} = Q_a(n+1) \begin{bmatrix} 1 \\ 0 \\ \vdots \\ 0 \end{bmatrix}
$$

h) et les quantités

$$
\begin{bmatrix} e_q(n+1) \\ Y_q(n+1) \end{bmatrix} = Q_a(n+1) \begin{bmatrix} y(n+1) \\ W^{1/2}\,Y_q(n) \end{bmatrix}
$$

et de là déterminer ladite valeur e(n+1) à partir de $e_q(n+1)$ et où la matrice $Q_\alpha$ est un matrice de rotation se présente sous la forme :

$$
Q_\alpha(n+1) = \begin{bmatrix} \cos\alpha_N & \cdots & 0 & \cdots & -\sin\alpha_N \\ \vdots & & \vdots & \vdots & \vdots & \vdots \\ 0 & & \cdots & 1 & \cdots & 0 \\ \sin\alpha_N & \cdots & 0 & \cdots & \cos\alpha_N \end{bmatrix} \cdots
$$

$$
\begin{bmatrix} 1 & \cdots & 0 & \cdots & & 0 \\ 0 & \cdots & 1 & \cdots & & 0 \\ \cdots & 0 & \cdots & \cos\alpha_1 & -\sin\alpha_1 \\ \cdots & 0 & \cdots & \sin\alpha_1 & \cos\alpha_1 \end{bmatrix}
$$

caractérisé en ce que les moyens de calcul comportent des moyens pour évaluer :

$$\sin\alpha_i = \frac{X_{aq;i}}{\sqrt{X_{aq;i}^2 + \sum_{k=1}^{i-1} X_{aq;k}^2 + E_a(n+1)}}$$

où $X_{aq;i}$ et $X_{aq;k}$ représentent, respectivement, la $i^{ème}$ et la $k^{ème}$ composante du vecteur $X_q$ et en ce que la matrice $Q_a$ se déduit d'une matrice $\hat{Q}_N(n+1)$, qui est une matrice formée d'une succession de N rotations

$$\hat{Q}_N(n+1) = \begin{bmatrix} \cos\theta_N & \cdots & -\sin\theta_N & \cdots & 0 \\ \vdots & \vdots & \vdots & \vdots & \vdots \\ \sin\theta_N & \cdots & \cos\theta_N & \cdots & 0 \\ \vdots & \vdots & \vdots & \vdots & \vdots \\ 0 & \cdots & 0 & \cdots & 1 \end{bmatrix} \quad \cdots$$

$$\begin{bmatrix} \cos\theta_1 & \cdots & 0 & \cdots & -\sin\theta_1 \\ \vdots & \vdots & \vdots & \vdots & \vdots \\ 0 & \cdots & 1 & \cdots & 0 \\ \vdots & \vdots & \vdots & \vdots & \vdots \\ \sin\theta_1 & \cdots & 0 & \cdots & \cos\theta_1 \end{bmatrix}$$

cette matrice servant à définir une matrice $Q_N(n+1)$ :

$$Q_N(n+1) = \hat{Q}_N(n+1) \begin{bmatrix} 1 & 0 \\ 0 & Q_N(n) \end{bmatrix}$$

la matrice $Q_a$ étant dérivée de cette denière matrice par suppression des rangées qui n'ont que des zéros et des uns,
caractérisé en ce que les moyens de calculs comportent des moyens pour évaluer :

$$\left.\begin{array}{l} \sin\theta_i = g_{N-i}/\gamma_i \\[2em] \gamma_{i+1} = \gamma_i \cos\theta_i \end{array}\right\}$$

**4.** Dispositif de traitement d' informations selon le revendication 3, caractérisé en ce qu'il est prévu une première table dont l'entrée est une tangente et la sortie un sinus, une deuxième table dont l'entrée est un sinus et la sortie un cosinus.

**5.** Dispositif de traitement d'informations selon le revendication 4, caractérisé en ce qu'il est prévu une autre table pour la mise à jour de la matrice $Q_a$, l'entrée de cette table étant un sinus et sa sortie un cosinus tandis que les moyens de mise à jour de la matrice $Q_a$ évaluent :

$$\left.\begin{array}{rcl} \sin\theta_i^{\cdot} & = & g_{N-i} \cdot \gamma_i^{/} \\[2em] \gamma_{i+1}^{/} & = & \gamma_i^{/} \cdot (1/\cos\theta_i) \end{array}\right\}$$

et $\gamma_N = 1/\gamma'_N$ .

**Claims**

**1.** A signal processing device for implementing a least squares method, which device has

- an input (50) for receiving a sample x(n+1) at the instant n+1,
- another input (100) for receiving at the same instant a reference sample y(n+ 1),
- an input (120) for producing a filtered data e(n+1) at the same instant,
- calculation means (30) operating in accordance with said processing device for minimizing each signal e(n+ 1) representing the difference between each received sample x(n+ 1) and each reference sample y(n+1),

characterized in that the calculation means comprise normalizing means for normalizing each sample x(n+1) by an energy normalization factor $E_o^{1/2}$ by determining sinusoidal values having an angle $\psi$ and the value $E_o^{1/2}(n+1)$ as a function of the previous value $E_o^{1/2}(n)$ and of a weight factor and the sample x(n+1) by the resolution of:

$$\begin{bmatrix} 0 \\ E_0^{1/2}(n+1) \end{bmatrix} = \begin{bmatrix} \cos\psi & -\sin\psi \\ \sin\psi & \cos\psi \end{bmatrix} \begin{bmatrix} x(n+1) \\ W^{1/2}E_0^{1/2}(n) \end{bmatrix}$$

**2.** An information processing device as claimed in Claim 1, characterized in that for evaluating the various sinusoidal functions a Table of sinusoidal functions is provided which preferably has the form of a read-only memory.

**3.** An information processing device as claimed in one of the Claims 1 or 2, implying matrices Qa and Q$\alpha$, characterized in that the calculation means comprise initialization means for setting:

- the cosine values to "1"
- the sine values to "0"
- for giving "0" values to values $X'_q$ and $Y_q$,

means for evaluating, after said normalizing means have been made operative,

a) the quantity

$$\begin{bmatrix} e'_{aq}(n+1) \\ X'_q(n+1) \end{bmatrix} = Q_a(n) \begin{bmatrix} \sin \psi \\ \cos \psi \cdot X'_q(n) \end{bmatrix}$$

b) the components $Q_\alpha$

c) the quantity

$$\begin{bmatrix} X'_q(n+1) \\ E'^{1/2}_a(n+1) \end{bmatrix} = Q_\alpha^{-1} \begin{bmatrix} 0 \\ \vdots \\ 0 \\ 1 \end{bmatrix}$$

d) the quantities

$$\alpha_2 = \gamma_N \cdot e'_{aq}(n+1) / E_a^{1/2}(n+1)$$

where

$$\gamma_N = \prod_{i=1}^{N} \cos\theta_i$$

and

$$\begin{bmatrix} \alpha_1 \\ G_N(n+1) \end{bmatrix} = Q_\alpha(n+1) \begin{bmatrix} G_N(n) \\ \alpha_2 \end{bmatrix}$$

where $\alpha_1 = g_{N+1}(n+1)$ and where
$G_N(n+1)$ is a vector formed by the components
$g_i(n+1)$ where

$$\begin{aligned} g_N(n+1) &= \sin\theta_1 \\ g_{N-1}(n+1) &= \sin\theta_2 \cos\theta_2 \\ \dots &= \dots \\ g_1(n+1) &= \sin\theta_N \prod_{i=1}^{N-1} \cos\theta_i \end{aligned} \Bigg\}$$

e) the quantity

$$\begin{bmatrix} g_{N+1}(n+1) \\ G_N(n+1) \end{bmatrix} = Q_\alpha(n+1) \begin{bmatrix} G_N(n) \\ \alpha_2 \end{bmatrix}$$

f) the components of $Q_a(n+1)$
g) the quantity

$$\begin{bmatrix} \gamma_N(n+1) \\ G_N(n+1) \end{bmatrix} = Q_a(n+1) \begin{bmatrix} 1 \\ 0 \\ \vdots \\ 0 \end{bmatrix}$$

h) and the quantities

$$\begin{bmatrix} e_q(n+1) \\ Y_q(n+1) \end{bmatrix} = Q_a(n+1) \begin{bmatrix} y(n+1) \\ W^{1/2} Y_q(n) \end{bmatrix}$$

and determine from there said value e(n+1) based on $e_q(n+1)$ and where the matrix $Q_\alpha$ is a rotation matrix and is presented in the form of

$$Q_\alpha(n+1) = \begin{bmatrix} \cos\alpha_N & \cdots & 0 & \cdots & -\sin\alpha_N \\ \vdots & & \vdots & \vdots & \vdots & & \vdots \\ 0 & & \cdots & 1 & \cdots & & 0 \\ \sin\alpha_N & \cdots & 0 & \cdots & \cos\alpha_N \end{bmatrix} \cdots$$

$$\begin{bmatrix} 1 & \cdots & 0 & \cdots & & 0 \\ 0 & \cdots & 1 & \cdots & & 0 \\ \cdots & 0 & \cdots & \cos\alpha_1 & -\sin\alpha_1 \\ \cdots & 0 & \cdots & \sin\alpha_1 & \cos\alpha_1 \end{bmatrix}$$

characterized in that the calculation means comprise mess for evaluating:

$$\sin\alpha_i = \frac{X_{aq;i}}{\sqrt{X_{aq;i}^2 + \sum_{k=1}^{i-1} X_{aq;k}^2 + E_a(n+1)}}$$

where $X_{aq;i}$ and $X_{aq;k}$ represent the $i^{th}$ and $k^{th}$ component respectively, of the vector $X_q$ and in that the matrix $Q_a$ is derived from a matrix

$$Q_N(n+1)$$

which is a matrix formed by a succession of N rotations

$$\hat{Q}_N(n+1) = \begin{bmatrix} \cos\theta_N & \cdots & -\sin\theta_N & \cdots & 0 \\ \vdots & & \vdots & & \vdots \\ \sin\theta_N & \cdots & \cos\theta_N & \cdots & 0 \\ \vdots & & \vdots & & \vdots \\ 0 & \cdots & 0 & \cdots & 1 \end{bmatrix} \quad \cdots \quad (7)$$

$$\begin{bmatrix} \cos\theta_1 & \cdots & 0 & \cdots & -\sin\theta_1 \\ \vdots & & \vdots & & \vdots \\ 0 & \cdots & 1 & \cdots & 0 \\ \vdots & & \vdots & & \vdots \\ \sin\theta_1 & \cdots & 0 & \cdots & \cos\theta_1 \end{bmatrix}$$

where this matrix is used for defining a matrix $Q_N(n+1)$:

$$Q_N(n+1) = \hat{Q}_N(n+1) \begin{bmatrix} 1 & 0 \\ 0 & Q_N(n) \end{bmatrix} \qquad (6)$$

where the matrix $Q_a$ is derived from the latter matrix by suppression of the rows that have only zeroes and ones, characterized in that the calculation means comprise means for evaluating

$$\left. \begin{array}{l} \sin\theta_i = g_{N-i} / \gamma_i \\[2ex] \gamma_{i+1} = \gamma_i \cos\theta_i \end{array} \right\} \qquad (51)$$

4. An information processing device as claimed in claim 3, characterized in that there is provided a first table whose input is a tangent and the output a sine, a second table whose input is a sine and the output a cosine.

5. An information processing device as claimed in claim 4, characterized in that there is provided another table for updating the matrix $Q_a$, the input of which table is a sine and its output a cosine, whereas the updating means of the matrix $Q_a$ evaluate:

$$\left. \begin{array}{l} \sin\theta_i = g_{N-i} / \gamma'_i \\[2ex] \gamma'_{i+1} = \gamma'_i \cos\theta_i \end{array} \right\}$$

and $\gamma_N = 1/\gamma'_N$.

**Patentansprüche**

1. Einrichtung zur Signalverarbeitung für die Durchführung eines am geringsten quadratischen Verfahrens, wobei die Einrichtung enthält:

   - einen Zugang (50) für den Erhalt von Mustern x(n+1) zum Zeitpunkt n+1,
   - einen anderen Zugang (100) zum Erhalt zu selben Zeitpunkt eines Referenzmusters y(n+1),
   - einen Zugang (120) zur Lieferung eines Filterwertes e(n+1) zum selben Zeitpunkt,
   - Rechenmittel (30) zu Minimierung jedes Signals e(n+1), das die Differenz zwischen jedem erhaltenen Muster x(n+1) und jedem Referenzmuster y(n+1) darstellt,

   dadurch gekennzeichnet, daß die Rechenmittel Normalisierungsmittel zur Normalisierung jedes Musters x(n+1) enthalten, über einen Normalisierungsfaktor einer Leistung $E_o^{1/2}$, unter Bestimmung der Sinuswerte eines Winkels P und des Wertes $E_o^{1/2}(n+1)$ unter Berücksichtigung des vorhergehenden Werts $E_o^{1/2}(n)$ und eines Gewichtungsfaktors des Musters x(n+1) für die Lösung von:

$$\begin{bmatrix} 0 \\ E_0^{1/2}(n+1) \end{bmatrix} = \begin{bmatrix} \cos\psi & -\sin\psi \\ \sin\psi & \cos\psi \end{bmatrix} \begin{bmatrix} x(n+1) \\ W^{1/2} \ E_0^{1/2}(n) \end{bmatrix}$$

2. Einrichtung zur Informationsverarbeitung nach Anspruch 1, dadurch gekennzeichnet, daß zur Bewertung der verschiedenen Sinusfunktionen eine Tabelle mit Sinusfunktionen vorgesehen ist, vorzugsweise in der Form eines Festspeichers präsentiert.

3. Einrichtung zur Informationsverarbeitung nach einem der Ansprüche 1 oder 2 mit dem Einsatz von Matrizen Qa und Qα, dadurch gekennzeichnet, daß die Rechenmittel Initialisierungsmittel enthalten um

   - die Kosinuswerte auf "1" und
   - die Sinuswerte auf "0" zu bringen,
   - um den Werten $X'_q$ und $Y_q$ die Werte "0" zu geben,

   Mittel, um nach der Umsetzung der besagten Normalisierungsmittel zu bewerten

   a) die Menge

$$\begin{bmatrix} e_{a'q}(n+1) \\ X_{q'}(n+1) \end{bmatrix} = Q_a(n) \begin{bmatrix} \sin\psi \\ \cos\psi \cdot X_{q'}(n) \end{bmatrix}$$

   b) die Komponenten Qα
   c) die Menge

$$\begin{bmatrix} X_{q'}(n+1) \\ E_{a'}^{1/2}(n+1) \end{bmatrix} = Q_\alpha^{-1} \begin{bmatrix} 0 \\ \vdots \\ 0 \\ 1 \end{bmatrix}$$

d) die Mengen

$$\alpha_2 = \gamma_N \cdot e'_{aq}(n+1)/E_a^{1/2}(n+1)$$

wobei

$$\gamma_N = \prod_{i=1}^{N} \cos\theta_i$$

und

$$\begin{bmatrix} \alpha_1 \\ G_N(n+1) \end{bmatrix} = Q_\alpha(n+1) \begin{bmatrix} G_N(4) \\ \alpha_2 \end{bmatrix}$$

wobei $\alpha_1 = g_{n+1}(n+1)$, und wobei
$G_N(n+1)$ ein Vektor ist, gebildet von den Komponenten
$g_i(n+1)$, wobei $g_N(n+1) = \sin\theta_1$,

$$g_{N-1}(n+1) = \sin\theta_2 \cos\theta_2$$

$$\cdot$$
$$\cdot$$
$$\cdot$$

$$g_1(n+1) = \sin\theta_N \prod_{i=1}^{N-1} \cos\Theta_i$$

e) die Menge

$$\begin{bmatrix} g_{N+1}(n+1) \\ G_N(n+1) \end{bmatrix} = Q_\alpha(n+1) \begin{bmatrix} G_N(n) \\ \alpha_2 \end{bmatrix}$$

f) die Komponenten von $Q_a(n+1)$
g) die Menge

$$\begin{bmatrix} \gamma_N(n+1) \\ G_N(n+1) \end{bmatrix} = Q_a(n+1) \begin{bmatrix} 1 \\ 0 \\ \vdots \\ 0 \end{bmatrix}$$

h) und die Mengen

$$\begin{bmatrix} e_q(n+1) \\ Y_q(n+1) \end{bmatrix} = Q_a(n+1) \begin{bmatrix} y(n+1) \\ W^{1/2} Y_q(n) \end{bmatrix}$$

und von da den Besagten Wert e(n+1) ausgehend von $e_q(n+1)$ zu bestimmen, und wobei die Matrize $Q_\alpha$ eine Rotationsmatrize ist und folgende Form annimmt:

$$Q_\alpha(n+1) = \begin{bmatrix} \cos\alpha_N & \dots & 0 & \dots & -\sin\alpha_N \\ \vdots & \vdots & \vdots & \vdots & \vdots \\ 0 & \dots & 1 & \dots & 0 \\ \sin\alpha_N & \dots & 0 & \dots & \cos\alpha_N \end{bmatrix} \dots$$

$$\begin{bmatrix} 1 & \dots & 0 & \dots & 0 \\ 0 & \dots & 1 & \dots & 0 \\ \dots & 0 & \dots & \cos\alpha_I & -\sin\alpha_I \\ \dots & 0 & \dots & \sin\alpha_I & \cos\alpha_I \end{bmatrix}$$

dadurch gekennzeichnet, daß die Rechenmittel Bewertungsmittel enthalten:

$$\sin\alpha_i = \frac{X_{aq;i}}{\sqrt{X_{aq;i}^2 + \sum_{k=1}^{i-1} X_{aq;k}^2 + E_a(n+1)}}$$

wobei $X_{aq;i}$ und $X_{aq;k}$ respektive die i. und die k. Komponente des Vektors Xq darstellen, und dadurch, daß die Matrize Qa sich von einer Matrize $\hat{Q}_{N(n+1)}$ ableitet, die eine von einer Folge von N Drehungen gebildete Matrize ist

$$\hat{Q}_N(n+1) = \begin{bmatrix} \cos\theta_N & \dots & -\sin\theta_N & \dots & 0 \\ \vdots & \vdots & \vdots & \vdots & \vdots \\ \sin\theta_N & \dots & \cos\theta_N & \dots & 0 \\ \vdots & \vdots & \vdots & \vdots & \vdots \\ 0 & \dots & 0 & \dots & 1 \end{bmatrix} \dots \begin{bmatrix} \cos\theta_1 & \dots & 0 & \dots & -\sin\theta_1 \\ \vdots & \vdots & \vdots & \vdots & \vdots \\ 0 & \dots & 1 & \dots & 0 \\ \vdots & \vdots & \vdots & \vdots & \vdots \\ \sin\theta_1 & \dots & 0 & \dots & \cos\theta_1 \end{bmatrix}$$

wobei diese Matrize der Definition einer Matrize $Q_N(n+1)$ dient:

$$Q_N(n+1) = \hat{Q}_N(n+1) \begin{bmatrix} 1 & 0 \\ 0 & Q_N(n) \end{bmatrix}$$

wobei die Matrize $Q_a$, von dieser letzteren Matrize durch Entfernen der Zeilen abgeleitet wird, die nur Nullen und Einser haben,
dadurch gekennzeichnet, daß die Rechenmittel Mittel zur Bewertung haben:

$$\left.\begin{aligned} \sin \theta_i &= g_{N-i} \cdot \gamma'_i \\[2em] \gamma'_{i+1} &= \gamma'_i . 1/\cos \theta_i \end{aligned}\right\}$$

4. Einrichtung zur Informationsverarbeitung nach Anspruch 3, dadurch gekennzeichnet, daß eine erste Tabelle vorgesehen ist, bei der der Eingang eine Tangente und der Ausgang ein Sinus ist, eine zweite Tabelle, bei der der Eingang ein Sinus und der Ausgag ein Kosinus ist.

5. Einrichtung zur Informationsverarbeitung nach Anspruch 4, dadurch gekennzeichnet, daß eine andere Tabelle zur Aktualisierung der $Q_a$ Matrize vorgesehen ist, wobei der Eingang der Tabelle ein Sinus und ihr Ausgang ein Kosinus ist, während die Aktualisierungsmittel der Matrize $Q_a$ bewerten:

$$\left.\begin{aligned} \sin \theta_i &= g_{N-i} / \gamma_i \\[2em] \gamma_{i+1} &= \gamma_i \cos \theta_i \end{aligned}\right\}$$

und $\gamma_N = 1/\gamma'_N$ .

FIG.1

FIG.2

FIG.3

FIG.4

FIG.9

FIG.10

FIG.5

$$\alpha 2 = \gamma \frac{e_{aq}}{e_q}$$

$$G(N+1) = G(N) \cos \alpha(N)$$
$$\qquad - \alpha 2 \cdot \sin \alpha(N)$$
$$EN = G(N) \cdot \sin \alpha(N)$$
$$\qquad - \alpha \cdot \cos \alpha(N)$$

— K162

$$i = 1, \cdots, N$$

$$\begin{bmatrix} G(i+1) \\ EN \end{bmatrix} = Q_\alpha(i) \begin{bmatrix} G(i) \\ E(N) \end{bmatrix}$$

— K164

$$G(1) = EN$$ — K166

$$\gamma = 1$$ — K167

$$i = 1, \cdots, N$$

$$\sin \theta(i) = G(1)/\gamma$$ — K168

$$\cos \theta(i)$$ — K170 $\Big\} K140$

$$\gamma = \gamma \cos \theta(i)$$ — K172

$$e_a = \gamma e_{aq}$$ — K174

$$i = 1, \cdots, N$$

$$\begin{bmatrix} e_q \\ Y_q \end{bmatrix} = Q_\alpha(i) \begin{bmatrix} y(n+1) \\ W^{1/2} Y_q \end{bmatrix}$$

— K176

— K178

$$e = e_{aq} \gamma$$

FIG. 6

K 200 — $x(n+1) \geq \frac{1}{2} E_{bo}$

K 201 — $\dfrac{x(n+1)}{E_{bo}^{1/2}}$

K 202 — $\dfrac{E_{bo}^{1/2}}{x(n+1)}$

$\sin \Psi$ }K130

$\cos \Psi$ }K130 — K210

$\cos \Psi$ }K140

$\sin \Psi$ }K140 — K212

K110, K111

## FIG.7

G(1) = EN — K166

$\gamma' = 1$ — K267

$i = 1, \cdots, N$
$\sin \theta(i) = G(1) \gamma'$ — K268

$\cos \theta(i)$ — K270

$1/\cos \theta(I)$ — K272 }K280

$\gamma' = \gamma' \cdot (1/\cos \theta(I))$ — K282

$\gamma = 1/\gamma'$ — K284

$e_q = \gamma e_{aq}$ — K174

Sin

1/Cos — 280

## FIG.8